Europäisches Patentamt

European Patent Office

Office européen des brevets

(19)

(11) Numéro de publication : **0 038 010**
**B1**

(12) FASCICULE DE BREVET EUROPÉEN

(45) Date de publication du fascicule du brevet :
05.10.83

(51) Int. Cl.³ : **B 28 B 21/18**, B 28 B   3/00

(21) Numéro de dépôt : **81102607.9**

(22) Date de dépôt : **07.04.81**

(54) **Dispositif de moulage de pièces tubulaires par compression isostatique.**

(30) Priorité : **14.04.80 FR 8008263**

(43) Date de publication de la demande :
**21.10.81 Bulletin 81/42**

(45) Mention de la délivrance du brevet :
**05.10.83 Bulletin 83/40**

(84) Etats contractants désignés :
**AT BE CH DE FR GB IT LI LU NL SE**

(56) Documents cités :
**FR E 88 441**

(73) Titulaire : **COMPAGNIE GENERALE D'ELECTRICITE**
**Société anonyme dite:**
**54, rue La Boétie**
**F-75382 Paris Cedex 08 (FR)**

(72) Inventeur : **Desplanches, Gérard**
**6, Résidence Les Rieux**
**F-91120 Palaiseau (FR)**
Inventeur : **Leboucq, Jacques**
**149, rue Pasteur**
**F-91700 Sainte Genevieve des Bois (FR)**

(74) Mandataire : **Weinmiller, Jürgen et al**
**Zeppelinstrasse 63**
**D-8000 München 80 (DE)**

Dispositif de moulage de pièces tubulaires par compression isostatique

La présente invention concerne un dispositif de moulage de pièces tubulaires par compression isostatique comprenant une enveloppe extérieure et un mandrin interne cylindriques d'axes sensiblement communs, la poudre destinée à confectionner la pièce tubulaire garnissant l'espace compris entre ladite enveloppe et ledit mandrin.

La technique de moulage par compression isostatique est bien connue, en particulier dans le domaine de la céramique où elle est mise en œuvre conjointement aux méthodes classiques de moulage par pressage et par coulage en barbotine.

Une telle technique consiste, dans ses grandes lignes, à introduire de la poudre dans un moule approprié que l'on obture de façon étanche et que l'on immerge au sein d'un liquide. Ce liquide est alors soumis à une pression élevée par tout moyen approprié. La pression hydrostatique qui en résulte est donc transmise à la poudre par les parois du moule, et on élabore ainsi une ébauche moulée qui sera alors frittée pour obtenir la pièce céramique dure.

Cependant, on constate dans la mise en œuvre de cette technique un certain nombre d'aléas.

En particulier, dans le cas où l'on désire réaliser des tubes, on introduit donc de la poudre entre l'enveloppe extérieure du moule et un mandrin et on opère comme indiqué ci-dessus.

Or, on s'aperçoit au démoulage que la pièce obtenue vient déborder légèrement de l'extrémité supérieure du moule et peut même se rompre à ce niveau.

Dans le but d'obvier à cet inconvénient, on a proposé de disposer à l'extrémité supérieure du moule, entre l'enveloppe extérieure et le mandrin un bouchon muni d'un joint torique venant en appui contre ladite enveloppe, ledit bouchon pouvant lors du débordement du tube moulé glisser entre ces deux pièces. Cependant une telle solution ne donne que des résultats peu satisfaisants.

Le but de l'invention est donc de concevoir un dispositif de moulage destiné à la confection de pièces tubulaires, en évitant la rupture de la pièce, tout en assurant une parfaite étanchéité vis-à-vis du liquide extérieur.

L'invention a donc pour objet un dispositif de moulage de pièces tubulaires par compression isostatique du type comprenant une enveloppe extérieure et un mandrin interne cylindriques d'axes sensiblement communs, la poudre destinée à confectionner la pièce tubulaire garnissant l'espace compris entre ladite enveloppe et ledit mandrin, caractérisé par le fait qu'il comporte en outre une entretoise fixe disposée sur une dépouille ménagée à la partie supérieure dudit mandrin et autour de cette dernière, un bouchon étant prévu également autour de ladite partie supérieure et venant porter d'une part sur l'extrémité supérieure de ladite entretoise fixe et d'autre part sur l'extrémité de ladite enveloppe, ledit bouchon étant évidé de sorte à ménager un espace annulaire autour de ladite entretoise fixe, une entretoise mobile étant disposée dans ledit espace annulaire et venant en appui sur la surface de ladite poudre, de sorte que lors de la compression isostatique l'extrémité supérieure de la pièce moulée puisse venir déborder dans ledit espace annulaire tout en entraînant ladite entretoise mobile.

L'invention sera décrite ci-après plus en détail à l'aide d'un exemple de mise en œuvre préférée et en référence aux dessins annexés dans lesquels :

La figure 1 représente le dispositif de moulage par compression isostatique selon l'invention avant sa mise sous pression.

La figure 2 représente ledit dispositif après décompression.

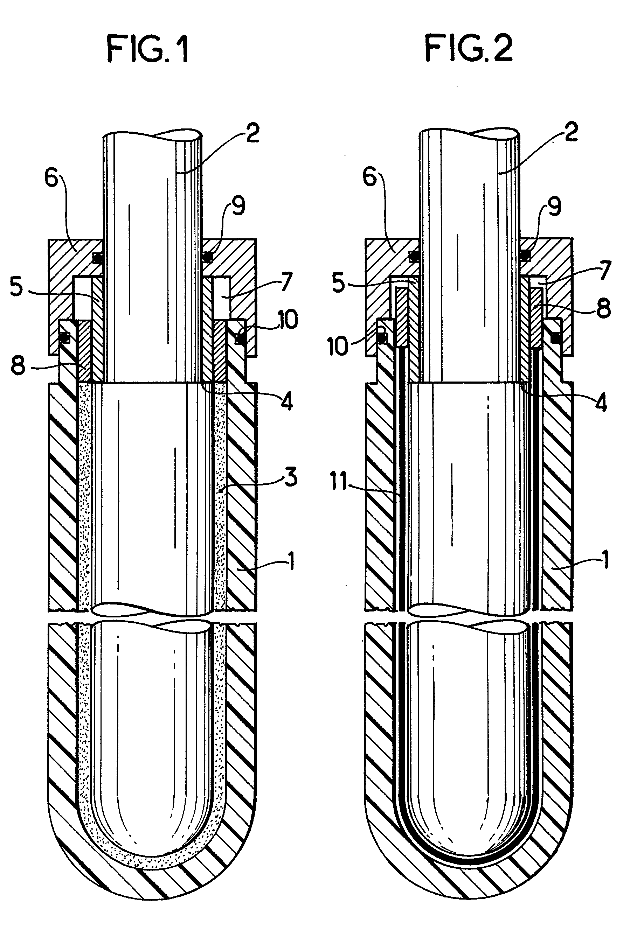

On a représenté sur la figure 1 un dispositif de moulage de tubes par compression isostatique selon l'invention.

Il comprend une enveloppe extérieure 1 et un mandrin interne 2 cylindriques.

L'espace entre ces deux composants est garni de poudre 3 destinée à la confection de la pièce.

Ladite enveloppe 1 est confectionnée en une résine de polyuréthane tandis que le mandrin 2 est réalisé en acier inoxydable ou en duralumin traité superficiellement.

La partie supérieure du mandrin 2 présente un diamètre inférieur à celui de la partie restante, de sorte qu'une dépouille 4 se trouve ménagée entre les deux parties. Sur cette dépouille 4 est disposée une entretoise fixe 5 réalisée en acier inoxydable. En outre un bouchon 6 de laiton ou d'acier inoxydable est disposé autour de l'extrémité du mandrin 2 et vient porter d'une part sur l'extrémité supérieure de l'entretoise 5 et d'autre part sur l'extrémité de l'enveloppe 1. Ce bouchon 6 est évidé de sorte à ménager un espace annulaire 7 autour de l'entretoise fixe 5.

Par ailleurs une entretoise mobile 8 confectionnée en acier inoxydable est disposée dans ledit espace 7 autour de l'entretoise fixe 5, et elle vient en appui sur la poudre 3.

Enfin, on voit sur les figures que des joints d'étanchéité 9 et 10 sont disposés entre le bouchon 6 d'une part et l'extrémité supérieure du mandrin 2 ainsi que de l'enveloppe 1 d'autre part.

Le dispositif selon l'invention fonctionne de la façon suivante :

Après avoir introduit la poudre 3 entre l'enveloppe 1 et le mandrin 2 on dispose l'entretoise mobile 8 comme représenté sur la figure 1, puis on obture l'ensemble au moyen du bouchon 6. Le dispositif est alors immergé au sein d'un liquide tel que le glycérol que l'on soumet alors à une pression hydrostatique à la manière connue.

Après décompression (fig. 2) la poudre 3 a été moulée sous forme d'un tube 11 dont l'extrémité supérieure est venue déborder dans l'espace annulaire 7, tout en repoussant l'entretoise mobile 8 dans ledit espace. De la sorte, on a permis au tube 11 de jouer librement dans l'espace 7 ce qui évite la rupture de la pièce.

De plus grâce à l'espace 7, on a évité d'emprisonner de l'air autour de la pièce et le tube ainsi moulé présente une épaisseur constante notamment à son extrémité ce qui évite d'effectuer un usinage ultérieur exhaustif de la pièce.

Il faut également noter que la mise en œuvre du bouchon 6 et notamment de l'entretoise fixe permet lors de la mise en pression d'assurer une étanchéité absolue vis-à-vis du liquide extérieur.

L'invention est avantageusement mise en œuvre dans la réalisation de tubes en alumine béta sodique aptes à être utilisés en tant qu'électrolyte solide dans des générateurs sodium-soufre.

On a pu confectionner des tubes de grande longueur, soit 500 mm, ne présentant aucune déformation.

## Revendications

1. Dispositif de moulage de pièces tubulaires par compression isostatique du type comprenant une enveloppe extérieure (1) et un mandrin interne (2) cylindriques d'axes sensiblement communs, la poudre (3) destinée à confectionner la pièce tubulaire (11) garnissant l'espace compris entre ladite enveloppe (1) et ledit mandrin (2), caractérisé par le fait qu'il comporte en outre une entretoise fixe (5) disposée sur une dépouille (4) ménagée à la partie supérieure dudit mandrin (2) et autour de cette partie supérieure, un bouchon (6) étant prévu également autour de ladite partie supérieure et venant porter d'une part sur l'extrémité supérieure de ladite entretoise fixe (5) et d'autre part sur l'extrémité de ladite enveloppe (1), ledit bouchon (6) étant évidé de sorte à ménager un espace annulaire (7) autour de ladite entretoise fixe (5), une entretoise mobile (8) étant disposée dans ledit espace annulaire (7) et venant en appui sur la surface de ladite poudre (3), de sorte que lors de la compression isostatique l'extrémité supérieure de la pièce moulée (11) puisse venir déborder dans ledit espace annulaire (7) tout en entraînant ladite entretoise mobile (8).

2. Dispositif selon la revendication 1, caractérisé par le fait que des joints d'étanchéité (9, 10) sont disposés entre ledit bouchon (6) d'une part et l'extrémité supérieure du mandrin (2) ainsi que de l'enveloppe (1) d'autre part.

3. Dispositif selon l'une des revendications 1 ou 2, caractérisé par le fait que ledit mandrin (2) est réalisé en acier inoxydable ou en duralumin, ladite entretoise fixe (5) et ladite entretoise mobile (8) sont confectionnées en acier inoxydable, ledit bouchon (6) étant réalisé en laiton ou en acier inoxydable, ladite enveloppe extérieure (1) étant confectionnée en une matière plastique notamment une résine.

## Claims

1. A device for moulding tubular parts by isostatic compression, of the type including an outer casing (1) and an inner mandrel (2) which are both cylindrical and are substantially co-axial, the powder (3) for manufacturing the tubular part (11) filling the space which lies between said casing (1) and said mandrel (2) characterized in that it further includes a stationary distance piece (5) disposed against a shoulder (4) formed in the upper portion of said mandrel (2) and around said upper portion, a cover (6) also being provided around said upper portion and bearing on the one hand against the upper end of said stationary distance piece (5) and on the other hand against the end of said casing (1), said cover (6) being hollowed out so as the provide an annular space (7) around said stationary distance piece (5), a moving distance piece (8) being disposed in said annular space (7) and bearing against the surface of said powder (3) so that during isostatic compression, the upper end of the moulded part (11) can extend into said annular space (7) while driving said moving distance piece (8).

2. A device according to claim 1, characterized in that seal members (9, 10) are disposed between said cover (6) on the one hand and the upper end of the mandrel (2) and the casing (1) on the other hand.

3. A device according to either one of claims 1 and 2, characterized in that said mandrel (2) is made of stainless steel or duralumin, said stationary distance piece (5) and said moving distance piece (8) are made of stainless steel, said cover (6) being made of brass or of stainless steel, said outer casing (1) being made of a plastics substance, in particular a resin.

## Ansprüche

1. Vorrichtung zum Formen rohrförmiger Teile durch isostatisches Pressen, von der Art, die eine äußere Hülle (1) und einen inneren Stempel (2) aufweist, die beide zylindrisch sind und die im wesentlichen koaxial sind, wobei das Pulver (3), das das rohrförmige Teil (11) bilden soll, den Zwischenraum zwischen der Hülle (1) und dem Stempel (2) ausfüllt, dadurch gekennzeichnet, daß sie außerdem ein festes Zwischenstück (5) aufweist, das auf einem Vorsprung (4) am oberen Teil des Stempels (2) und rund um diesen oberen Teil angeordnet ist, wobei ein Stopfen (6) ebenfalls rund um diesen oberen Teil vorgesehen ist, der einerseits auf dem oberen Ende des festen Zwischenstücks (5) und andererseits auf dem Ende der Hülle (1) sitzt, wobei der Stopfen (6) hohl ausgebildet ist, derart, daß ein ringförmiger Raum (7) um das feste Zwischenstück (5) herum gebildet wird, wobei ein bewegliches Zwischenstück (8) in diesem ringförmigen Raum (7) angeordnet ist und sich auf der Oberfläche des Pulvers (3) abstützt, so daß bei dem isostatischen Pressen das obere Ende des geformten Stücks (11) sich nach oben in den ringförmigen Raum (7) ausdehnen kann und dabei das bewegliche Zwischenstück (8) nach oben schiebt.

2. Vorrichtung nach Anspruch 1, dadurch gekennzeichnet, daß Dichtungen (9, 10) zwischen einerseits dem Stopfen (6) und andererseits dem oberen Ende des Stempels (2) und der Hülle (1) angeordnet sind.

3. Vorrichtung nach einem der Ansprüche 1 oder 2, dadurch gekennzeichnet, daß der Stempel (2) aus rostfreiem Stahl oder Duralumin besteht, das feste Zwischenstück (5) und das bewegliche Zwischenstück (8) aus rostfreiem Stahl hergestellt sind, der Stopfen (6) aus Messing oder rostfreiem Stahl und die äußere Hülle (1) aus einem Plastikmaterial, insbesondere einem Harz, besteht.

# FIG.1

# FIG.2